# EUROPEAN PATENT APPLICATION

(11) **EP 1 308 872 A1**
(43) Date of publication of application: **07.05.2003**
(21) Application number: 01125188.1
(22) Date of filing: 24.10.2001
(51) Int. Cl.: G06K 7/00, G06K 19/07

(54) **An identifying assembly comprising an interrogator and a transponder**

(71) Applicant: Datamars SA, 6930 Bedano-Lugano (CH)
(72) Inventor: Hassan-Zade, Parvis, 6922 Morcote (CH); Ishii, Takamasa, 6946 Ponte Capriasca (CH)
(74) Representative: Ventocilla, Abraham

(57) **Abstract**

The antenna (2) of an interrogator (1) is inductively coupled with the antenna (4) of a transponder (3). An auxiliary antenna system (5, 6) is placed between the interrogator antenna (2) and the transponder antenna (4), which allows either an increase in the working distance between transponder (3) and interrogator (1) or a reduction in the size of the transponder (3) with equal working distance. Preferably the auxiliary antenna system (5, 6) comprises a coil (5) and a condenser (6) and is tuned to the frequency of the interrogator signal for increasing the magnetic flux in the transponder antenna (4).

## Description

This invention relates to an identifying assembly according to the preamble of claim 1.

Today for many applications, passive transponders are used. Passive transponders do not contain any energy source but draw the energy for their activation and function from the field energy of the interrogating device. Making use of this energy the data contained in the transponder are then sent to the interrogating device. In some cases, interrogator and transponder allow even data to be written to the transponder.

For energy and data transmission from interrogator to transponder and from transponder to interrogator, respectively, mostly inductive coupling is used. Therefore, the antenna diameter of the transponder, more precisely the effective circumference of the magnetic field generated by the interrogator, is significant for the performance of the system.

This invention aims at providing an identifying assembly having at the same time improved performance and freedom in providing adequate solutions for different requirements without the need for transponders adapted to such requirements. This aim is achieved by the assembly as defined in the characterising part of claim 1. By assembling said auxiliary antenna system with an existing identifying equipment the performance of the same may substantially be improved and adapted to specific needs.

Particularly, in order to improve the performance, that is to increase the distance between interrogator and transponder, there is no need for changing the performance of the existing equipment, but it has been found that addition of an adequate auxiliary antenna system is sufficient for the purpose. Thereby, no galvanic connection of the auxiliary antenna with any circuit of the existing equipment is required, but by placing the proper auxiliary antenna system in proximity of the equipment the performance of the same may be improved. Preferably an auxiliary coil antenna tuned to the frequency of the interrogating signal is placed near the transponder.

More specific features of the invention are disclosed in the following description of a preferred embodiment illustrated in the drawing wherein
Fig. 1 is a schematic diagram of an identifying assembly,
Fig. 2 is a top view of an open support equipped with a transponder and an auxiliary antenna,
Fig. 3 is a top view of an open support equipped with an auxiliary antenna only,
Fig. 4 is a top view of an open support with a transponder only,
Fig. 5 is a cross-section of a closed support along line V-V in Fig. 2, and
Fig. 6 is a cross-section of an assembly of the support of Fig. 3 and the support of Fig. 4.

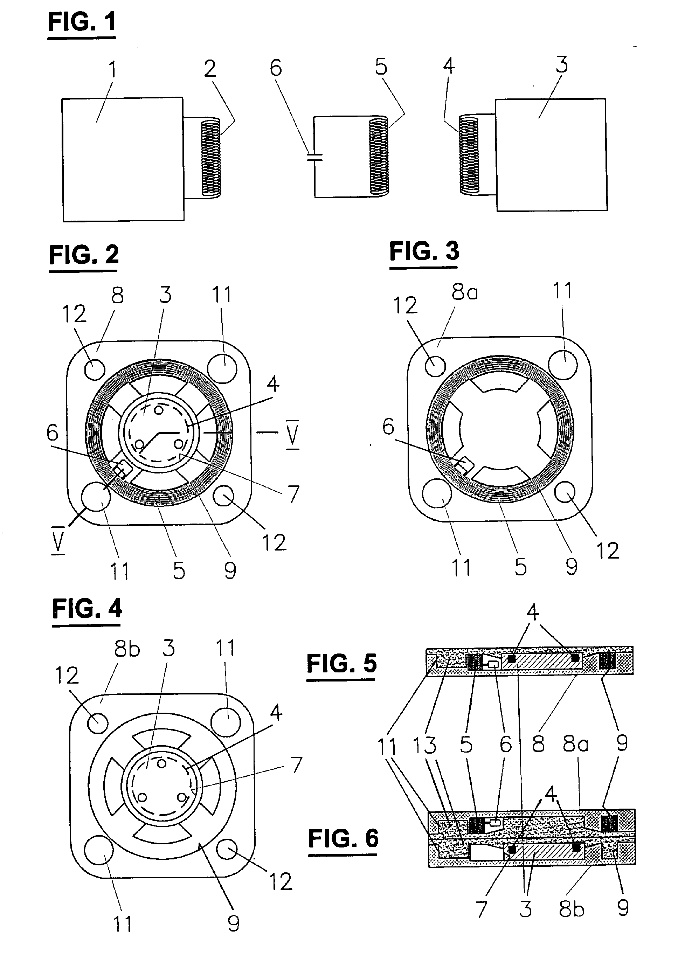

Fig. 1 shows schematically the parts of an identifying assembly, comprising an interrogator 1 having an inductive interrogator antenna 2, and a transponder 3 having an inductive transponder antenna 4. In this way the interrogator 1 and the transponder 3 are inductively coupled for communication as set out above. According to the present invention an auxiliary antenna system 5, 6 is placed between interrogator 1 and transponder 3, preferably in proximity of the transponder antenna 4. Preferably, the auxiliary antenna is tuned to the interrogating frequency of the interrogator.

The auxiliary antenna system 5, 6 comprises a circuit with an inductance preferably of a coil 5, a capacitance 6 and a resistance and is electromagnetically coupled with the transponder antenna 4 and the interrogator antenna 2. This coupling makes it possible to focus the electromagnetic field and/or to match particular characteristics of the identifying assembly, such as the impendances of the transponder antenna 4 and/or the interrogator antenna 2, resulting in an enhanced performance.

In one embodiment the auxiliary antenna system 5, 6 is configured and dimensioned for changing at least one characteristic of at least one of the interrogator antenna 2 and transponder antenna 4, e.g. the respective resonance frequency.

In another embodiment the auxiliary antenna system 5, 6 is tuned to the interrogating frequency of the interrogator 1.

Still in another embodiment the auxiliary antenna system 5, 6 is configured and dimensioned for compensating the change of at least one characteristic of the transponder antenna 4 and/or the interrogator antenna 2, wherein this change is produced by the presence of a material which is close to the transponder antenna 2 and/or the interrogator antenna 4. Thus, the characteristics of the transponder antenna 4 and/or the interrogator antenna 2 can be modified by means of the auxiliary antenna system 5, 6 in such a way, that the transponder antenna 4 and/or the interrogator antenna 2 show up desired characteristics when they are used close to material which is adapted to change these characteristics.

By way of example the resonance frequency of the transponder antenna 4 may be modified by the auxiliary antenna system 5, 6, so that when the transponder antenna 4 is used e. g. close to metal, the detuning effects of the metal change the resonance frequency of the transponder antenna 4 to a desired frequency, for example to the interrogating frequency.

While the capacitance 6 may be an important part of the assembly, for instance being a trimmer for adjusting the natural frequency, the coil 5 may also be used without separate condenser if e.g. its own natural frequency is equal or sufficiently near to the interrogating frequency.

Besides using the stray capacitance of the coil 5 as capacitance 6, it also possible to use the inductance of the coil 5 as the inductance of the auxiliary antenna system and/or to use the resistance of the coil 5 as the resistance of the auxiliary antenna system.

Figs. 2 to 6 show a preferred practical embodiment. A disc-shaped transponder 3 of usual design is loosely seated in a circular recess 7 substantially in the centre of a flat support 8 which is of substantially square shape and is made of plastics material. The support 8 has an annular groove 9 in which a circular coil 5 is loosely inserted.

The coil 5 may be connected to a condenser 6 as shown in Figs. 5 and 6. In other embodiments, there is no condenser and the coil whose ends being short-circuited has a natural frequency which is preferably tuned to the interrogator frequency as mentioned above.

As indicated by the dashed line in Figs. 2 and 4 the transponder 3 has a circular coil antenna 4, e.g. an on-chip antenna, at its rim. The coil 5 and the transponder antenna 4 are in a substantially coaxial position and substantially in a common plane, which results in a relatively tight electromagnetic coupling of these coils 4 and 5. It has been found that in this way the coil 5 being of larger dimension than the transponder antenna 4 acts as an efficient auxiliary antenna by which energy transmission between the interrogator 1 and the transponder 3 is efficiently improved.

The support 8 has recesses 11 and through holes 12 for fixing the same to any object to be identified or for interconnection of a plurality of supports as will be explained hereinafter.

Fig. 3 shows a support 8a equipped with the auxiliary antenna system 5, 6, but without a transponder. This subassembly may be added to an existing assembly of a similar support 8b with a transponder 4 but without an auxiliary antenna system as shown in Fig. 4. Fig. 6 illustrates this possibility.

Fig. 6 shows a cross-section of a support 8a according to Fig. 3 attached to a support 8b according to Fig. 4, that is, with a transponder 3 only. As indicated in Fig. 6, a support 8a with an auxiliary antenna 5 but without transponder may be attached by any suitable means to the support 8b in order to make use of the auxiliary antenna effect. In one embodiment the attached supports 8a and 8b are adapted to be disassembled.

Figs. 5 and 6 show that the supports 8, 8a and 8b are closed by a sealing material 13 cast into the hollow spaces.

In another embodiment the identifying assembly comprises a plurality of auxiliary antenna systems 5, 6 of different characteristics for assemblage with transponders and interrogators, wherein the auxiliary antenna systems 5, 6 are configured and dimensioned for providing identifying equipment of desired performance.

As mentioned above, auxiliary antenna coils as shown, tuned substantially to the interrogator frequency are surprisingly efficient. The interrogating signal is a continuous signal of constant frequency which is efficiently reinforced by the auxiliary antenna coil without transient effects, while the digitally modulated answer signal from the transponder at a different frequency is hardly attenuated by the auxiliary antenna.

Of course the invention is not limited to the practical embodiment described above, but many modifications are possible. Reference is made to the claims. Most of them do not need further explanation. While it has been admitted above that the auxiliary antenna is located close to the transponder and its antenna respectively, and thus is coupled mainly to the transponder, an auxiliary antenna might also be coupled more tightly with the interrogator and its antenna respectively.

Although preferred embodiments of the invention have been described above using specific terms, such description is for illustrative purposes only, and it is to be understood that changes and variations may be made without departing from the spirit or scope of the claims of this patent application.

### List of reference numbers

1 interrogator
2 interrogator antenna
3 transponder
4 transponder antenna
5 coil of the auxiliary antenna system
6 capacitance of the auxiliary antenna system
7 recess
8 support equipped with a transponder and an auxiliary antenna system
8a support equipped with an auxiliary antenna system
8b support equipped with a transponder
9 groove
11 recess
12 through hole
13 sealing material

## Claims

1. An identifying assembly comprising an interrogator (1) having an interrogator antenna (2) and a transponder (3) having a transponder antenna (4), **characterised by** at least one auxiliary antenna system (5, 6) having at least one inductance, at least one capacitance and at least one resistance, said auxiliary antenna system (5, 6) being electromagnetically coupled with at least one of said transponder antenna (4) and interrogator antenna (2) for focusing the electromagnetic field and/or for matching the antenna impedance for enhancement of performance and/or any characteristics of the identifying assembly.

2. An assembly according to claim 1, wherein said auxiliary antenna system (5, 6) is configured and dimensioned for changing at least one characteristic of at least one of said interrogator antenna (2) and transponder antenna (4).

3. An assembly according to claim 1 or 2, wherein said auxiliary antenna system (5, 6) is tuned to the interrogating frequency of said interrogator (1).

4. An assembly according to any of the claims 1 to 3, wherein said capacitance (6) is the stray capacitance of a coil (5).

5. An assembly according to any of the claims 1 to 4, wherein said resistance is the resistance of a coil (5).

6. An assembly according to any of the claims 1 to 5, wherein said inductance is the inductance of a coil (5).

7. An assembly according to any of the claims 1 to 6, wherein said transponder antenna (4) is an on-chip antenna.

8. An assembly according to any of the claims 1 to 7, wherein the auxiliary antenna system (5, 6) is configured and dimensioned for compensating the change of at least one characteristic of said transponder antenna (4) and/or said interrogator antenna (2), said change being produced by the presence of a material which is close to said transponder antenna (2) and/or said interrogator antenna (4).

9. An assembly according to any of claims 1 to 8, comprising a support (8) being adapted to be equipped with said transponder (3) and said auxiliary antenna system (5, 6).

10. An assembly according to claim 9, wherein said support (8) has an annular groove (9) for accommodation of a coil (5) of said auxiliary antenna system (5, 6) and a central recess (7) for accommodation of said transponder (3).

11. An assembly according to claim 9 or 10, wherein said support (8, 8a, 8b) being assembled with an auxiliary antenna system (5, 6) and/or a transponder (3) is adapted to be disassembled.

12. An assembly according to any of claims 9 to 11, wherein said transponder (3) is disc-shaped and said auxiliary antenna system (5, 6) comprises an annular auxiliary antenna (5), said support (8) being adapted for supporting said transponder (3) and said auxiliary antenna (5) substantially in a common plane.

13. An assembly according to claim 12, wherein said transponder (3) has an annular antenna (4), said auxiliary antenna (5) and transponder antenna (4) being supported by said support (8) in substantially coaxial positions.

14. An assembly according to any one of claims 9 to 13, comprising at least one support (8a) which is equipped with an auxiliary antenna (5), preferably a coil antenna (5), said support (8a) being adapted for assemblage with a support (8b) which is equipped with a transponder (3) only.

15. An assembly according to any one of claims 1 to 14, comprising a plurality of auxiliary antenna systems (5, 6) of different characteristics for assemblage with transponders and interrogators, said plurality of auxiliary antenna systems (5, 6) being configured and dimensioned for providing identifying equipment of desired performance.

16. An assembly according to any of claims 1 to 15, wherein said auxiliary antenna system (5, 6) has a natural frequency substantially equal to the interrogator frequency of the interrogating signal of said interrogator (1), said transponder (3) being adapted to transmit an answer signal having a carrier frequency differing from said interrogator frequency.
